# EUROPEAN PATENT APPLICATION

(11) **EP 4 160 447 A1**
(43) Date of publication of application: **05.04.2023**
(21) Application number: 21812392.5
(22) Date of filing: 13.05.2021
(51) Int. Cl.: G06F 16/9538, G06F 16/338, G06F 40/274

(54) **DEVICE, METHOD, AND PROGRAM FOR ASSISTING TEXT INPUT**

(30) Priority: 27.05.2020 JP 2020091879
(71) Applicant: OMRON Corporation, Kyoto 600-8530 (JP)
(72) Inventor: NAKAMURA Tetsuya, Kyoto-shi, Kyoto 604-8152 (JP)
(74) Representative: Horn Kleimann Waitzhofer Patentanwälte PartG mbB
(86) International application number: PCT/JP2021/018223
(87) International publication number: WO 2021/241253

(57) **Abstract**

A first searcher searches a dictionary with a first character string that is input, and acquires a second character string corresponding to the first character string. The second searcher performs a web search with a search character string based on the first character string that is input, and acquires a keyword extracted from a search result as a third character string. A search switching step switches between the first searcher and the second searcher. An outputter outputs the second character string acquired by the first searcher or the third character string acquired by the second searcher.

## Description

### TECHNICAL FIELD

The present invention relates to a technique for assisting a user to input a character with an information processing device.

### BACKGROUND ART

Conventionally, there has been a prediction conversion function as one of techniques for assisting a user to input a character with an information processing device. The prediction conversion function is a function of predicting a character string (desired character string) to be input by the user before the user's operation for inputting the desired character string is completed, and presenting the character string to the user as a prediction conversion candidate. When there is a desired character string among the presented prediction conversion candidates, the user can input the desired character string by selecting the desired character string. The prediction conversion function reduces an operation amount of the user for character input.

Furthermore, Patent Document 1 describes a device configured to acquire prediction conversion candidates on the basis of user's input, viewing tendency, or the like. Patent Document 1 is configured to register a keyword extracted from a title or detailed information of a television program guide (EPG) in a database as an associative character string. Then, the device of Patent Document 1 acquires a related keyword (related keyword) from the database on the basis of a character input by the user. Then, the related keyword is output as a prediction conversion candidate. That is, the device described in Patent Document 1 can acquire a prediction conversion candidate from a preset database on the basis of user's input, viewing tendency, or the like, and present the prediction conversion candidate to the user.

### PRIOR ART DOCUMENTS

### PATENT DOCUMENTS

Patent Document 1: JP 2006-031205 A

### SUMMARY OF THE INVENTION

### PROBLEMS TO BE SOLVED BY THE INVENTION

However, in a case where the user cannot remember a word that the user desires to input (desired character string), the prediction conversion function cannot assist the user in character input. The prediction conversion function predicts a prediction conversion candidate on the basis of a character string input by a user. A user who cannot remember a word that the user desires to input cannot input a character related to the word.

As described above, in the conventional techniques, it is not possible to assist the user who cannot remember a word that the user desires to input, in character input.

An object of the present invention is to provide a technique that can assist a user who cannot remember a word that the user desires to input (desired character string), in character input.

### MEANS FOR SOLVING THE PROBLEM

A character input assisting device of the present invention is configured as follows in order to achieve the above object.

An inputter receives input of a first character string. The first character string is a character string input by a user's input operation. The character string mentioned here may include any number of characters as long as the number of characters is one or more. The first character string may be of a type of language, a character string of which relates to pronunciation notation (pronunciation) (for example, Japanese Kana and Chinese Pinyin), or may be of a type of language, a character string of which is a word (spelling) (for example, English and German).

A first searcher searches a dictionary with the first character string that is input, and acquires a second character string corresponding to the first character string. The second character string is a conversion candidate of the first character string. The conversion candidate mentioned here include a prediction conversion candidate.

The second searcher performs a web search with a search character string based on the first character string, and acquires a keyword extracted from a search result as a third character string.

A search switcher receives selection of the first searcher or the second searcher. When the first searcher is selected, the search switcher causes the first searcher to search a dictionary. When the second searcher is selected, the search switcher causes the second searcher to perform a web search.

In addition, when the first searcher is selected, an outputter outputs the second character string acquired by the first searcher. In addition, when the second searcher is selected, the outputter outputs the third character string acquired by the second searcher.

According to this configuration, when the user cannot remember a word that the user desires to input, the user selects the second searcher and inputs a character string related to a question for searching for the word as the first character string, whereby a candidate (third character string) of the word that the user desires to input is presented. Thus, it is possible to assist the user who cannot remember a word that the user desires to input, in character input.

In addition, when the user remembers a word that the user desires to input, the user selects the first searcher and inputs a character string related to the word as the first character string, thereby performing desired character input. Therefore, the operability of the user for character input is not deteriorated.

For example, the search switcher may be configured not to cause the second searcher to perform a web search when the first searcher is selected, and not to cause the first searcher to search the dictionary when the second searcher is selected. With this configuration, it is possible to prevent unnecessary processing from being performed on the first character string.

In addition, for example, the second searcher may acquire the title of a web site page searched by the web search as a search result, or may acquire the title and heading of the web site page as a search result.

In addition, for example, the second searcher may be configured to perform morphological analysis on a search result of a web search and extract a keyword.

In addition, for example, the second searcher may detect the appearance frequency for each keyword extracted from the search result of the web search and determine the keyword to be acquired as the third character string on the basis of the detected appearance frequency. With this configuration, it is possible to suppress presentation, to the user, of an inappropriate word as an answer to a question input by the user to search for a word that the user cannot remember.

### EFFECT OF THE INVENTION

According to the present invention, it is possible to assist a user who cannot remember a word that the user desires to input, in character input.

### BRIEF DESCRIPTION OF THE DRAWINGS

Fig. 1 is a diagram illustrating a character input system of this example.
Fig. 2 is a block diagram illustrating a configuration of a main part of the character input assisting device of this example.
Fig. 3 is a block diagram illustrating a configuration of a main part of a character input device of this example.
Fig. 4 is an example illustrating an operation screen displayed on a display of the character input device when dictionary search is selected.
Fig. 5 is an example illustrating an operation screen displayed on the display of the character input device when web search is selected.
Fig. 6 is a flowchart illustrating an operation of the character input device.
Fig. 7 is a flowchart illustrating an operation of the character input assisting device.
Fig. 8(A) is a diagram illustrating a title of each web page acquired as a search result of a web search, Fig. 8(B) is a diagram illustrating an extracted keyword, and Fig. 8(C) is a diagram illustrating an acquired input candidate.
Fig. 9 is an example illustrating an operation screen displayed on a display of an English character input device when dictionary search is selected.
Fig. 10 is an example illustrating an operation screen displayed on the display of the English character input device when web search is selected.

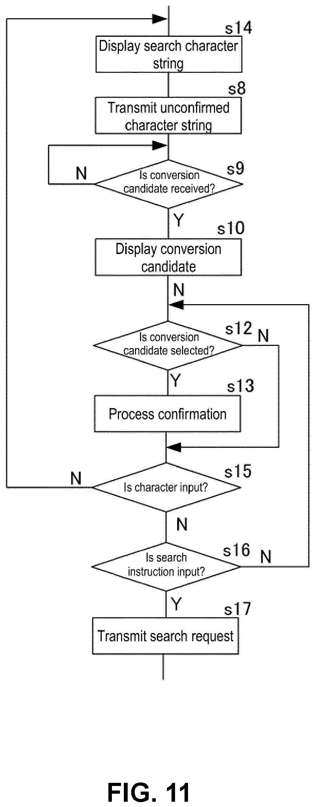

Fig. 11 is a flowchart illustrating an operation of a character input assisting device of a third modification.

### MODE FOR CARRYING OUT THE INVENTION

Hereinafter, embodiments of the present invention will be described.

### <1. Application example>

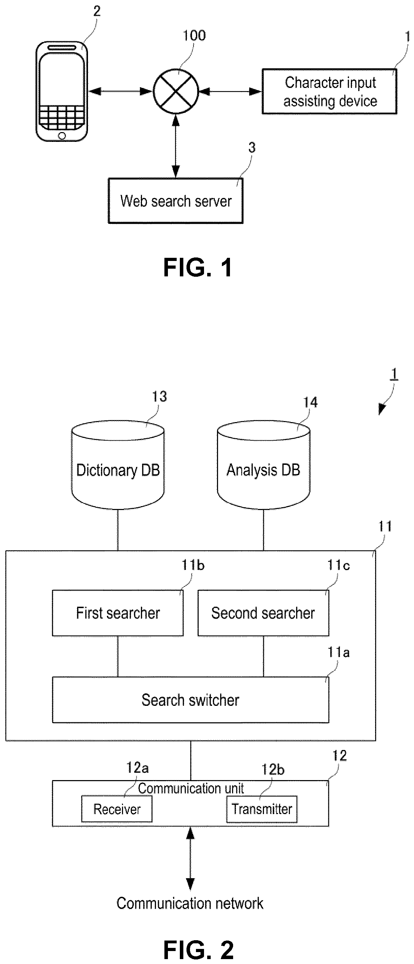

Fig. 1 is a diagram illustrating a character input system of this example. The character input system of this example includes a character input assisting device 1, a character input device 2, and a web search server 3 (web search server 3). The character input assisting device 1, the character input device 2, and the web search server 3 (web search server 3) are connected to a communication network 100 such as the Internet. The character input assisting device 1, the character input device 2, and the web search server 3 can perform data communication via the communication network 100.

The character input device 2 is a terminal operated by a user. The character input assisting device 1 performs processing of acquiring a candidate corresponding to a character string input from the character input device 2 (a first character string in the present invention), and outputs the acquired candidate (a second character string or a third character string in the present invention) to the character input device 2. The web search server 3 performs a web search with the search character string input from the character input assisting device 1, and outputs a search result to the character input assisting device 1.

The character input device 2 may be of any type as long as it is an information processing device that allows the user to input a character. For example, the character input device 2 may be a mobile terminal (smartphone, tablet terminal, etc.) or a personal computer. Here, a case where the character input device 2 is a smartphone will be described as an example.

The character input device 2 outputs a character string input by a user's character input operation (the first character string in the present invention) to the character input assisting device 1. The character string output from the character input device 2 is input to (received by) the character input assisting device 1 via the communication network 100. In addition, the character input device 2 outputs (transmits) a selection request for requesting a dictionary search or a web search to the character input assisting device 1.

The character input assisting device 1 outputs (transmits), to the character input device 2, a candidate (conversion candidate or input candidate) corresponding to the character string input by the user's character input operation. The conversion candidate corresponds to the second character string in the present invention. The input candidate corresponds to the third character string in the present invention. Here, in a case where the conversion candidate and the input candidate are collectively referred to, they are simply referred to as candidates.

The character input assisting device 1 acquires the conversion candidate by a dictionary search. In addition, the character input assisting device 1 acquires the conversion input candidate by a web search. In response to the selection request from the character input device 2, the character input assisting device 1 switches whether the candidate corresponding to the input character string is acquired by a dictionary search or a web search. When performing a web search, the character input assisting device 1 outputs a search character string based on the character string input to the character input assisting device 1 to the web search server 3. The search character string may be a character string input from the character input device 2 or a character string obtained by converting the character string input from the character input device 2.

The web search server 3 performs a web search with the search character string input from the character input assisting device 1, and outputs a search result to the character input assisting device 1.

The character input assisting device 1 extracts a keyword from the search result of the web search in the web search server 3. The character input assisting device 1 acquires the extracted keyword as an input candidate.

The character input device 2 displays candidates input from the character input assisting device 1. When any of the candidates input from the character input assisting device 1 is selected, the character input device 2 sets the selected candidate as a confirmed character string. The confirmed character string is a character string input of which has been confirmed by a user.

In this example, when the user remembers a word for which the user desires to input a character, the user can acquire a conversion candidate from the character input assisting device 1 by performing an operation of inputting the character string of the word with the character input device 2. At this time, the user may perform an operation of selecting dictionary search on the character input device 2.

In addition, when the user cannot remember a word for which the user desires to input a character, the user can acquire a keyword (input candidate) acquired from a search result obtained by a web search by performing an operation of inputting a character string related to a question for searching for the word with the character input device 2. At this time, the user may perform an operation of selecting web search on the character input device 2.

Thus, the character input system of this example can assist a user who cannot remember a word that the user desires to input, in character input.

### <2. Configuration example>

First, a Japanese character input system will be described as an example. Fig. 2 is a block diagram illustrating a configuration of a main part of the character input assisting device. The character input assisting device 1 includes a control unit 11, a communication unit 12, a dictionary database 13 (dictionary DB 13), and an analysis database 14 (analysis DB 14).

The control unit 11 controls operation of each unit in the main body of the character input assisting device 1. In addition, the control unit 11 includes a search switcher 11a, a first searcher 11b, and a second searcher 11c. The search switcher 11a, the first searcher 11b, and the second searcher 11c included in the control unit 11 will be described later.

The communication unit 12 includes a receiver 12a and a transmitter 12b. The communication unit 12 has an interface function with respect to the communication network 100 in the character input assisting device 1. More specifically, the communication unit 12 performs data communication with the character input device 2 and the web search server 3 via the communication network 100. The receiver 12a receives data transmitted from the character input device 2 and the web search server 3 via the communication network 100. The transmitter 12b transmits data to the character input device 2 and the web search server 3 via the communication network 100.

The receiver 12a corresponds to an inputter in the present invention, and the transmitter 12b corresponds to an outputter in the present invention.

The dictionary DB 13 is a database in which a pronunciation, a part of speech, and the like are registered in association with each other for each word. The analysis DB 14 is a database in which information to be referred to in morphological analysis is registered. The dictionary DB 13 and the analysis DB 14 include storage media such as a hard disk drive (HDD), a solid state drive (SSD), and a memory card.

Note that the dictionary DB 13 and the analysis DB 14 may be configured by one database.

Next, the search switcher 11a, the first searcher 11b, and the second searcher 11c included in the control unit 11 will be described.

The search switcher 11a selects one of the first searcher 11b and the second searcher 11c in response to the selection request from the character input device 2. The search switcher 11a causes the selected searcher (the first searcher 11b or the second searcher 11c) to search for a candidate for the character string (the first character string in the present invention) input from the character input device 2.

The first searcher 11b takes the character string input from the character input device 2 as the pronunciation, searches the dictionary DB 13, and acquires matched words as conversion candidates. The conversion candidates include a word having the pronunciation matching the character string input from the character input device 2 (here, it is referred to as a non-prediction conversion candidate), and a word having the pronunciation forward-matching the character string input from the character input device 2 and is not an exact match (here, it is referred to as a prediction conversion candidate.). The first searcher 11b performs known kana-kanji conversion processing in a Japanese character input system.

The second searcher 11c regards the character string input from the character input device 2 as a search character string for a web search, and requests the web search server 3 to perform a web search with the search character string. In addition, when acquiring the search result from the web search server 3, the second searcher 11c performs morphological analysis on the search result and extracts keywords. The second searcher 11c refers to the analysis DB 14 to perform morphological analysis on the search result of the web search. The second searcher 11c acquires a keyword having a high appearance frequency among the keywords extracted from the search result of the web search as an input candidate. For example, the second searcher 11c acquires a keyword having the number of appearances larger than a predetermined number of times among the keywords extracted from the search result of the web search as an input candidate.

The control unit 11 of the character input assisting device 1 includes a hardware CPU, a memory, and other electronic circuits. When executing a character input assisting program according to the present invention, the hardware CPU operates as the search switcher 11a, the first searcher 11b, and the second searcher 11c. In addition, the memory has an area in which the character input assisting program according to the present invention is expanded, and an area in which data or the like generated at the time of executing the character input assisting program is temporarily stored. The control unit 11 may be an LSI in which the hardware CPU, the memory, and the like are integrated. The hardware CPU is a computer that executes a character input assisting method according to the present invention.

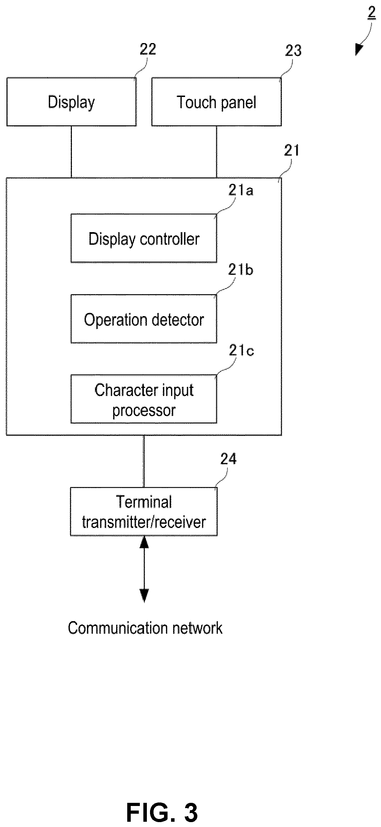

Fig. 3 is a block diagram illustrating a configuration of a main part of the character input device. As described above, a case where the character input device 2 is a smartphone will be described as an example. The character input device 2 in this example includes a control unit 21, a display 22, a touch panel 23, and a terminal transmitter/receiver 24.

The control unit 21 controls operation of each unit in the main body of the character input device 2. In addition, the control unit 21 includes a display controller 21a, an operation detector 21b, and a character input processor 21c. The display controller 21a, the operation detector 21b, and the character input processor 21c included in the control unit 21 will be described later.

An operation screen for character input or the like is displayed on the display 22. The touch panel 23 is attached to the screen of the display 22 and is an operation device for the user to perform an input operation. The terminal transmitter/receiver 24 has an interface function with respect to the communication network 100 in the character input device 2. More specifically, the terminal transmitter/receiver 24 performs data communication with the character input assisting device 1 via the communication network 100.

Next, the display controller 21a, the operation detector 21b, and the character input processor 21c included in the control unit 21 will be described.

The display controller 21a controls a screen to be displayed on the display 22. The operation detector 21b detects a user's input operation on the character input device 2 by detecting a user's operation position on the touch panel 23. The character input processor 21c performs processing related to the character input by the user according to the input operation by the user.

The control unit 21 includes a hardware CPU, a memory, and other electronic circuits. When executing a program related to character input, the hardware CPU operates as the display controller 21a, the operation detector 21b, and the character input processor 21c. In addition, the memory has an area in which the program related to character input is expanded, and an area in which data or the like generated at the time of executing the program related to character input is temporarily stored. The control unit 21 may be an LSI in which the hardware CPU, the memory, and the like are integrated.

In addition, the character input device 2 switches selection of dictionary search or web search according to the input operation of the user. When the user remembers a word for which the user desires to input a character, the user selects dictionary search. When the user does not remember a word for which the user desires to input a character, the user selects web search.

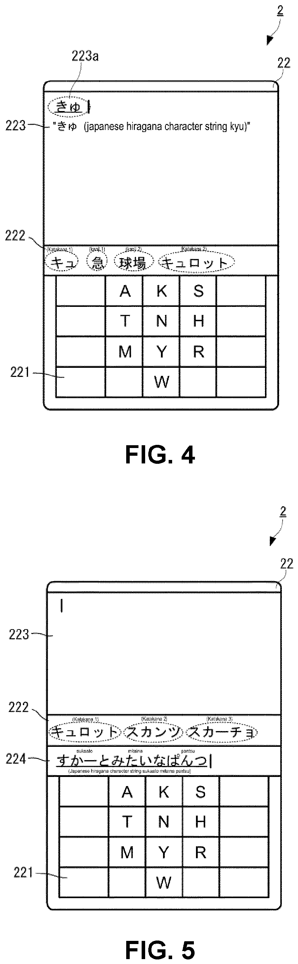

Fig. 4 is an example illustrating an operation screen (dictionary search screen) displayed on a display of the character input device when dictionary search is selected. When dictionary search is selected, the character input device 2 displays a screen including a keypad display area 221, a candidate display area 222, and a character display area 223 on the display 22.

Various keys for inputting characters are displayed in the keypad display area 221. In the candidate display area 222, conversion candidates obtained by the character input assisting device 1 by the dictionary search for an unconfirmed character string are displayed. In Fig. 4, the conversion candidate " 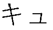 (Katakana 1)" displayed in the candidate display area 222 is a non-prediction conversion candidate. In addition, in Fig. 4, the conversion candidates "S. (Kanji 1)", " 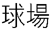 (Kanji 2)", and " 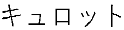 (Katakana 2)" displayed in the candidate display area 222 are prediction conversion candidates.

A character string input by the user is displayed in the character display area 223. In the character display area 223, a confirmed character string and an unconfirmed character string are displayed. An unconfirmed character string is a character string the input of which has not been confirmed by the user, and a confirmed character string is a character string the input of which has been confirmed by the user. An unconfirmed character string is underlined (a confirmed character string is not underlined). Fig. 4 does not illustrate a confirmed character string. The user can recognize an unconfirmed character string according to the presence or absence of the underline. For example, the character string 223a (" 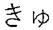 (Japanese hiragana character string Kyu") displayed in the character display area 223 illustrated in Fig. 4 is underlined and thus is an unconfirmed character string.

Fig. 5 is an example illustrating an operation screen (web search screen) displayed on the display of the character input device when web search is selected. When web search is selected, the character input device 2 displays a screen including the keypad display area 221, the candidate display area 222, the character display area 223, and a search character display area 224 on the display 22.

The user can recognize whether dictionary search or web search is selected at that time depending on whether the search character display area 224 is displayed on the screen of the display 22.

In addition, when web search is selected, the character input device 2 displays the character string input by the user not in the character display area 223 but in the search character display area 224. In addition, when web search is selected, the character input device 2 displays, in the candidate display area 222, the input candidates " 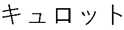 (Katakana 1)", " 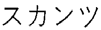 (Katakana 2)", and " 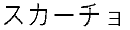 (Katakana 3)" extracted from the search result of the web search by the character input assisting device 1.

The web search server 3 is a device that searches information published on the web such as the Internet for information that matches a search character string and outputs a search result. Since the web search server 3 has a known configuration, the description thereof will be omitted here.

Note that Figs. 4 and 5 exemplify a case where the word that the user desires to input is " 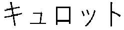 (Japanese katakana character string Kyurotto)". In addition, Fig. 4 is an example of a case where the user remembers a word that the user desires to input, and Fig. 5 is an example of a case where the user does not remember a word that the user desires to input.

### <3. Operation example>

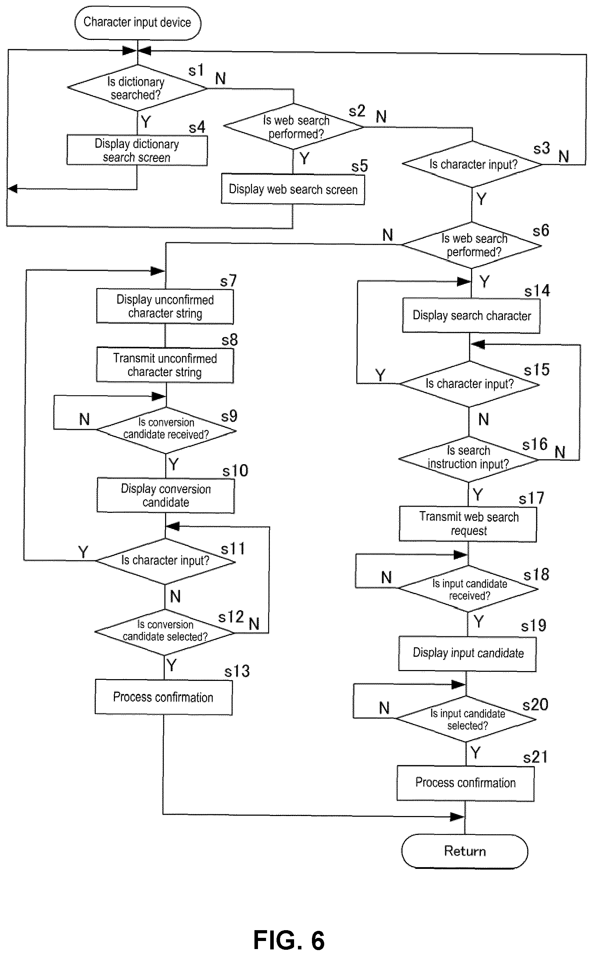

Fig. 6 is a flowchart illustrating an operation of the character input device. The character input device 2 is in an initial state in which no character has been input for an unconfirmed character string or a search character string. However, the character input device 2 may have not input a confirmed character string or may have already input a confirmed character string.

The character input device 2 waits for the user to perform any one of dictionary search, web search selection operation, and character input operation (s1 to s3). When the user performs an operation to select dictionary search, the character input device 2 causes the display 22 to display the dictionary search screen (see Fig. 4) having no search character display area 224 (s4), and returns to s1. When the user performs an operation to select web search, the character input device 2 causes the display 22 to display the web search screen (see Fig. 5) having the search character display area 224 (s5), and returns to s1.

The dictionary search screen displayed in s4 is a screen in which an unconfirmed character string has not been input (an unconfirmed character string is not displayed in the character display area 223). In addition, the web search screen displayed in s5 is a screen in which a search character string has not been input (a search character string is not displayed in the search character display area 224).

In addition, when the user performs a character input operation, the character input device 2 determines which one of dictionary search and web search is selected at that time (s6). When determining that dictionary search is selected in s6, the character input device 2 displays the unconfirmed character string at this time point in the character display area 223 (s7). In s7, a character string obtained by adding a currently input character to the unconfirmed character string immediately before the current character input is set as the unconfirmed character string at this time point.

In addition, the character input device 2 transmits the unconfirmed character string at this time point to the character input assisting device 1 by the terminal transmitter/receiver 24 (s8). In s8, a dictionary search request is also transmitted to the character input assisting device 1. When receiving conversion candidates from the character input assisting device 1 by the terminal transmitter/receiver 24, the character input device 2 displays the received conversion candidates in the candidate display area 222 (s9, s10). The character input device 2 waits to receive a new character input operation or to receive selection of a conversion candidate displayed in the candidate display area 222 (s11, s12). When receiving a new character input operation, the character input device 2 returns to s7 and repeats the above processing.

When receiving the selection of a conversion candidate displayed in the candidate display area 222, the character input device 2 confirms the unconfirmed character string at that time point (s13), returns to s1, and repeats the above processing. In step s13, the unconfirmed character string at that time point is confirmed as the character string of the currently selected conversion candidate.

When determining that web search is selected in s6, the character input device 2 displays the search character string at this time point in the search character display area 224 (s14). In s14, a search character string obtained by adding a currently input character to the search character string immediately before the current character input is set as the search character string at this time point.

The character input device 2 waits to receive a new character input operation or to receive a search instruction input operation (s15, s16). When receiving a new character input operation, the character input device 2 returns to s14 and repeats the above processing.

When receiving the search instruction input operation, the character input device 2 transmits a request for a web search including the search character string input at that time point to the character input assisting device 1 by the terminal transmitter/receiver 24 (s17).

When receiving input candidates from the character input assisting device 1, the character input device 2 displays the received input candidates in the candidate display area 222 (s18, s19). When receiving the selection of an input candidate displayed in the candidate display area 222, the character input device 2 confirms the currently selected input candidate as a confirmed character string (s20, s21).

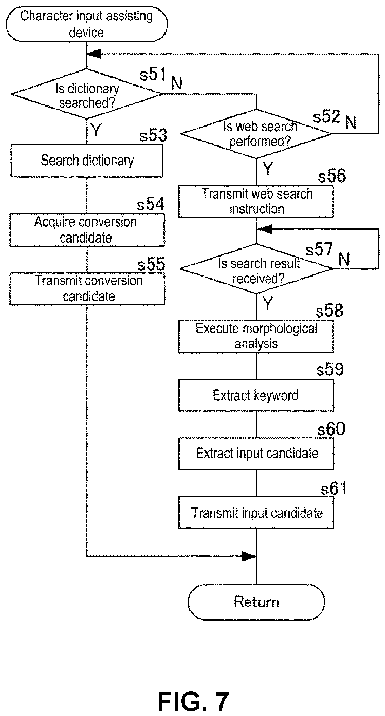

Fig. 7 is a flowchart illustrating an operation of the character input assisting device. The character input assisting device 1 causes the communication unit 12 to wait to receive a dictionary search request or a web search request from the character input device 2 by the receiver 12a (s51, s52).

As described above, the character input device 2 transmits the dictionary search request to the character input assisting device 1 in s8. In addition, as described above, the character input device 2 transmits the web search request to the character input assisting device 1 in s17. The character input assisting device 1 causes the search switcher 11a to determine whether the search request from the character input device 2 is a dictionary search request or a web search request. In addition, when determining that a dictionary search request has been received, the search switcher 11a selects the first searcher 11b, and when determining that a web search request has been received, the search switcher 11a selects the second searcher 11c.

When the character input assisting device 1 determines that the dictionary search request has been received, the character input assisting device 1 searches the dictionary DB 13 with the unconfirmed character string transmitted together with the dictionary search request, and acquires conversion candidates for the unconfirmed character string (s53, s54). The conversion candidates acquired in s54 are words registered in the dictionary DB 13. The conversion candidates acquired in s54 include a conversion candidate (non-prediction conversion candidate) the pronunciation of which exactly matches the unconfirmed character string and a conversion candidate (prediction conversion candidate) the pronunciation of which forward-matches the unconfirmed character string. The first searcher 11b performs the processing of s53 and s54. The character input assisting device 1 transmits the conversion candidates acquired in s54 to the character input device 2 (s55), and returns to s51.

When determining that a dictionary search request has been received, the character input assisting device 1 does not execute a search for input candidates by the second searcher 11c.

When receiving a web search request, the character input assisting device 1 transmits an execution instruction of the web search to the web search server 3 (s56). The execution instruction of the web search transmitted in step s56 includes the search character string received from the character input device 2.

The web search server 3 executes the web search with the search character string input from the character input assisting device 1, and outputs a search result to the character input assisting device 1. The search character string used by the web search server 3 to execute the web search is the search character string received by the character input assisting device 1 from the character input device 2. That is, the character string is a character string input by the user with the character input device 2.

The character input assisting device 1 waits to receive the search result from the web search server 3 (s57). When the character input assisting device 1 receives the search result from the web search server 3, the character input assisting device 1 performs morphological analysis on the received search result (s58). For example, the character input assisting device 1 performs morphological analysis on the title of each web page searched by the web search server 3. For example, the character input assisting device 1 may perform morphological analysis not only on the title of each web page searched by the web search server 3 but also on a heading of the web page. The processing of s58 is performed by the second searcher 11c with reference to the analysis DB 14.

The second searcher 11c performs processing of extracting keywords from the analysis result of the morphological analysis on the search result of the web search (s59). For example, the second searcher 11c extracts a word of a predetermined part of speech (for example, a noun) as a keyword. The part of speech extracted as the keyword may be one kind or plural kinds.

The second searcher 11c acquires an input candidate from among the keywords extracted in s59 (s60). In step s60, for each keyword extracted in step s59, the number of times that the keyword appears in the search result (the number of appearances) is counted. The second searcher 11c acquires a keyword the number of appearances of which exceeds a predetermined number of times (n times) as an input candidate. In other words, the second searcher 11c does not acquire a keyword the number of appearances of which does not exceed a predetermined number of times (n times) as an input candidate.

Note that the second searcher 11c may acquire all the keywords extracted in s59 as input candidates.

The character input assisting device 1 transmits the input candidate acquired in s60 to the character input device 2 (s61), and returns to s51.

As described above, when the character input device 2 requests a dictionary search, the character input assisting device 1 of this example acquires a conversion candidate corresponding to the unconfirmed character string, and transmits the acquired conversion candidate to the character input device 2. Therefore, when the user remembers a word that the user desires to input, the user may select dictionary search and perform an operation to input a character string of the word.

Furthermore, when the user cannot remember a word that the user desires to input, the user selects web search and inputs a question for searching for the word, whereby the word that the user desires to input is presented as an input candidate. Thus, this configuration can assist character input by a user who cannot remember a desired character string (word that the user desires to input).

For example, it is assumed that a word that the user desires to input is " 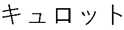 (Japanese katakana character string Kyurotto)". When the user remembers " 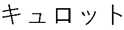 (Japanese katakana character string Kyurotto)", the user selects dictionary search. For example, when the user inputs " 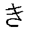 (Japanese hiragana character Ki)" and " 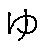 (Japanese hiragana character Yu)" in this order (at this point, " 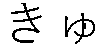 (Japanese hiragana character string Kyu" is an unconfirmed character string), " 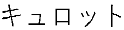 (Katakana 2)" is displayed as a conversion candidate in the candidate display area 222 as illustrated in Fig. 4. The user selects " 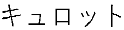 (Katakana 2)" displayed as the conversion candidate. As a result, the user can input " 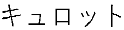 (Japanese katakana character string Kyurotto)", which is the word that the user desires to input.

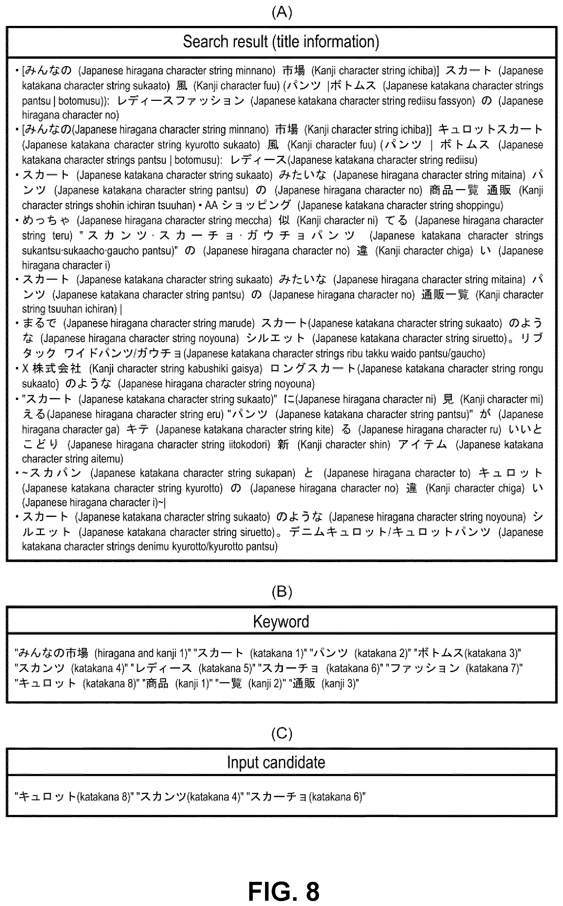

When the user does not remember " 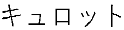 (Japanese katakana character string Kyurotto)", the user selects web search. For example, the user inputs " 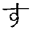 (Japanese hiragana character Su) ", " 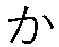 (Japanese hiragana character Ka)", "- (Japanese long sound symbol)", " 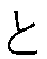 (Japanese hiragana character To)", " 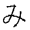 (Japanese hiragana character mi)", " 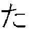 (Japanese hiragana character Ta)", " 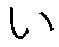 (Japanese hiragana character I)", " 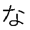 (Japanese hiragana character Na)", " 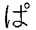 (Japanese hiragana character Pa)", " 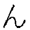 (Japanese hiragana character N)", and " 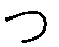 (Japanese hiragana character Tsu)" in this order, and then performs an input operation of a search instruction. In this case, the search character string is " 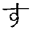 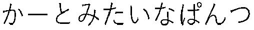 (Japanese hiragana character string Sukaato mitaina pantsu)". The second searcher 11c acquires the title of each web page searched by the web search server 3 as the search result of the web search. Fig. 8(A) is a diagram illustrating the title of each web page acquired as a search result of the web search. The second searcher 11c performs morphological analysis on the title of each web page acquired as the search result of the web search, and extracts keywords. Fig. 8(B) is a diagram illustrating the keywords extracted from the web search result. The second searcher 11c counts the number of appearances for each extracted keyword, and acquires a keyword the number of appearances of which exceeds a predetermined number of times (n times) as an input candidate. Fig. 8(C) is a diagram illustrating the acquired input candidates. For example, as illustrated in Fig. 5, when " 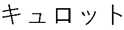 (Katakana 8)" is displayed as an input candidate, the user notices that the word that the user desires to input is " 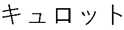 (Japanese katakana character string Kyurotto)". The user selects " 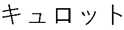 (Katakana 8)", which is the word that the user desires to input. As a result, the user can input " 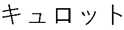 (Japanese katakana character string Kyurotto)", which is the word that the user desires to input.

Note that although Fig. 8 illustrates the case where the titles of web pages are acquired as the web search result, the titles and headings of the web pages may be acquired as the web search result.

### <4. Modifications>

### - First Modification

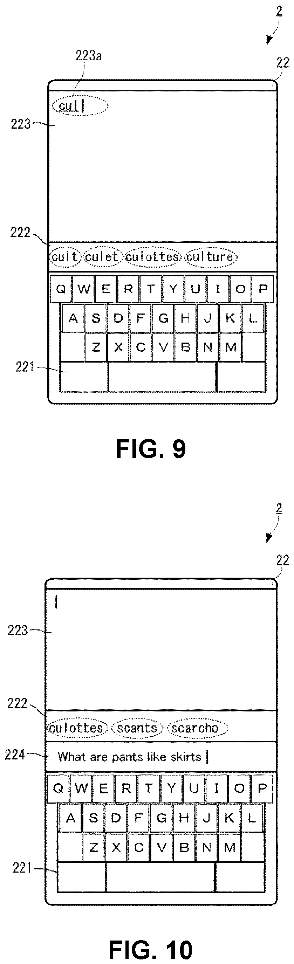

An English character input system will be described as an example. Fig. 9 illustrates a screen example of a display when dictionary search is selected. Fig. 10 illustrates a screen example of the display when web search is selected.

The character input device 2 also performs the processing illustrated in Fig. 6 when the target language for character input is English. The character input assisting device 1 also performs the processing illustrated in Fig. 7 when the target language for character input is English. However, since the English character input device 2 is configured such that the user inputs a character string (spelling) of a word instead of inputting a character string related to pronunciation notation (pronunciation) unlike Japanese, the dictionary DB 13 does not associate pronunciation with each word.

For example, it is assumed that a word that the user desires to input is "culottes". When the user remembers "culottes", the user selects dictionary search. For example, when the user inputs "c", "u", and "l" in this order (at this point, "cul" is an unconfirmed character string), "culottes" is displayed as a conversion candidate in the candidate display area 222 as illustrated in Fig. 9. The user selects "culottes" displayed as the conversion candidate. As a result, the user can input "culottes", which is the word that the user desires to input.

When the user does not remember "culottes", the user selects web search. For example, after inputting "W", "h", "a", "t", "a", "r", "e", "p", "a", "n", "t", "s", "l", "i", "k", "e", "s", "k", "i", "r", "t", and "s" in this order, the user performs an input operation of a search instruction. In this case, "What are pants like skirts" is the search character string. The second searcher 11c acquires the title of each web page searched by the web search server 3 as the search result of the web search. The second searcher 11c performs morphological analysis on the title of each web page acquired as the search result of the web search, and extracts keywords. The second searcher 11c counts the number of appearances for each extracted keyword, and acquires a keyword the number of appearances of which exceeds a predetermined number of times (n times) as an input candidate. For example, as illustrated in Fig. 10, when "culottes" is displayed as an input candidate, the user notices that the word that the user desires to input is "culottes". The user selects "culottes", which is the word that the user desires to input. As a result, the user can input "culottes", which is the word that the user desires to input.

Although not particularly illustrated, the type of language may be a language (for example, Chinese) other than Japanese in which a user inputs a character string related to pronunciation notation (pronunciation), or may be a language (for example, German) other than English in which a user inputs a character string of a word.

### - Second Modification

The second searcher 11c may be configured to perform kana-kanji conversion for the search character string received from the character input device 2 (referred to as a first search character string) and instruct the web search server 3 to perform a web search with the search character string subjected to kana-kanji conversion (referred to as a second search character string).

In this case, the second searcher 11c performs morphological analysis on the first search character string received from the character input device 2, and divides the first search character string into morphemes. The second searcher 11c performs known kana-kanji conversion for each morpheme obtained by dividing the first search character string to obtain a second search character string obtained by performing kana-kanji conversion on the first search character string. The second searcher 11c executes this processing between s52 and s56 illustrated in Fig. 7.

For example, the second searcher 11c performs kana-kanji conversion on the first search character string " 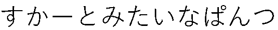 (Japanese hiragana character string Sukaato mitaina pantsu)" received from the character input device 2 to obtain the second search character string " 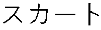 (Japanese katakana character string Sukaato) 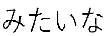 (Japanese hiragana character string Mitaina) 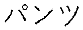 (Japanese katakana character string Pantsu)". The character input assisting device 1 instructs the web search server 3 to execute a web search with " 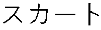 (Japanese katakana character string Sukaato) 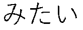 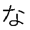 (Japanese hiragana character string Mitaina) 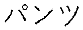 (Japanese katakana character string Pantsu)".

As described above, the character input assisting device 1 may be configured to request the web search server 3 to perform a web search not with pronunciation notation, but with a character string obtained by converting pronunciation notation (character string subjected to kana-kanji conversion in a Japanese character input system).

### - Third Modification

Furthermore, the character input device 2 may be configured to perform kana-kanji conversion on an input search character string. In this case, the processing of s14 to s17 may be replaced with the processing illustrated in Fig. 10.

In Fig. 10, processing similar to the processing illustrated in Fig. 6 is denoted by the same step numbers.

Briefly, when a search character string is displayed in s14, the unconfirmed character string belonging to the search character string is transmitted to the character input assisting device 1 (s8). At this time, the character input device 2 requests the character input assisting device 1 to perform not a web search but a dictionary search.

When receiving conversion candidates from the character input assisting device 1, the character input device 2 displays the received conversion candidates in the candidate display area 222 (s9, s10). The character input device 2 waits for any one of a conversion candidate selection operation, a character input operation, and a search instruction input operation to be performed (s12, s15, s16). When a conversion candidate selection operation is performed, the character input device 2 performs confirmation processing (s13) and waits for either a character input operation or a search instruction input operation to be performed. When receiving a character input operation, the character input device 2 returns to s14 and repeats the above processing. In addition, when a search instruction input operation is performed, the character input device 2 executes s17 and the following processing.

In the third modification, after confirming that the search character string is " 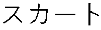 (Japanese katakana character string Sukaato) 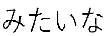 (Japanese hiragana character string Mitaina) 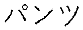 (Japanese katakana character string Pantsu)" in the character input device 2, the user can request the character input assisting device 1 to perform a web search with the search character string.

### - Fourth Modification

The above examples describe the configuration in which the character input assisting device 1 and the character input device 2 are connected via the communication network 100, but the character input assisting device 1 and the character input device 2 may be an integrated device.

Note that the present invention is not limited to the above-described embodiments as they are, and can be embodied by modifying the components without departing from the gist thereof in an implementation stage. In addition, various inventions can be formed by appropriately combining a plurality of components disclosed in the above embodiments. For example, some components may be deleted from all the components shown in the embodiments. Furthermore, components in different embodiments may be appropriately combined.

Furthermore, the correspondence relationship between the configuration according to the present invention and the configurations according to the above-described embodiments can be described as the following supplementary notes.

### < Supplementary note >

A character input assisting device (1) including:
an inputter (12a) to which a first character string is input;
a first searcher (11b) configured to search a dictionary with the first character string and acquires a second character string corresponding to the first character string;
a second searcher (11c) configured to perform a web search with a search character string based on the first character string and acquire a keyword extracted from a search result as a third character string;
a search switcher (11a) configured to receive selection of the first searcher (11b) or the second searcher (11c), cause the first searcher (11b) to search the dictionary when the first searcher (11b) is selected, and cause the second searcher (11c) to perform the web search when the second searcher (11c) is selected; and
an outputter (12b) configured to output the second character string acquired by the first searcher (11b) when the first searcher (11b) is selected, and output the third character string acquired by the second searcher (11c) when the second searcher (11c) is selected.

### DESCRIPTION OF SYMBOLS

- 1: character input assisting device
- 2: character input device
- 3: web search server (web search server)
- 11: control unit
- 11a: search switcher
- 11b: first searcher
- 11c: second searcher
- 12: communication unit
- 12a: receiver
- 12b: transmitter
- 13: dictionary database (dictionary DB)
- 14: analysis database (analysis DB)

## Claims

1. A character input assisting device comprising:
an inputter to which a first character string is input;
a first searcher configured to search a dictionary with the first character string and acquires a second character string corresponding to the first character string;
a second searcher configured to perform a web search with a search character string based on the first character string and acquire a keyword extracted from a search result as a third character string;
a search switcher configured to receive selection of the first searcher or the second searcher, cause the first searcher to search the dictionary when the first searcher is selected, and cause the second searcher to perform the web search when the second searcher is selected; and
an outputter configured to output the second character string acquired by the first searcher when the first searcher is selected, and output the third character string acquired by the second searcher when the second searcher is selected.

2. The character input assisting device according to claim 1, wherein the search switcher does not cause the second searcher to perform the web search when the first searcher is selected, and does not cause the first searcher to search the dictionary when the second searcher is selected.

3. The character input assisting device according to claim 1 or 2, wherein the second searcher acquires a title of a web site page searched by the web search as a search result.

4. The character input assisting device according to claim 1 or 2, wherein the second searcher acquires a title and a heading of a web site page searched by the web search as a search result.

5. The character input assisting device according to any one of claims 1 to 4, wherein the second searcher performs morphological analysis on a search result of the web search and extracts a keyword.

6. The character input assisting device according to any one of claims 1 to 5, wherein the second searcher detects an appearance frequency for each keyword extracted from a search result of the web search, and determines a keyword to be acquired as the third character string based on the detected appearance frequency.

7. The character input assisting device according to any one of claims 1 to 6, wherein
the dictionary is a database in which a kana character string and a converted character string are registered in association with each other,
the first character string is a kana character string, and
the first searcher searches the dictionary, and acquires, as the second character string, a converted character string associated with a kana character string that forward-matches the first character string that is input.

8. The character input assisting device according to any one of claims 1 to 6, wherein the first searcher searches the dictionary, and acquires, as the second character string, a character string that forward-matches the input first character string that is input.

9. The character input assisting device according to any one of claims 1 to 8, wherein the search character string is the first character string.

10. The character input assisting device according to any one of claims 1 to 8, wherein the search character string is a character string obtained by converting the first character string into the second character string.

11. A character input assisting method comprising:
a first searching step of searching a dictionary with a first character string that is input and acquiring a second character string corresponding to the first character string;
a second searching step of performing a web search with a search character string based on the first character string and acquiring a keyword extracted from a search result as a third character string;
a search switching step of receiving selection of the first searching step or the second searching step, causing the first searching step to search the dictionary when the first searching step is selected, and causing the second searching step to perform the web search when the second searching step is selected; and
an outputting step of outputting the second character string acquired by the first searching step when the first searching step is selected, and outputting the third character string acquired by the second searching step when the second searching step is selected.

12. A character input assisting program comprising:
a first searching step of searching a dictionary with a first character string that is input and acquiring a second character string corresponding to the first character string;
a second searching step of performing a web search with a search character string based on the first character string and acquiring a keyword extracted from a search result as a third character string;
a search switching step of receiving selection of the first searching step or the second searching step, causing the first searching step to search the dictionary when the first searching step is selected, and causing the second searching step to perform the web search when the second searching step is selected; and
an outputting step of outputting the second character string acquired by the first searching step when the first searching step is selected, and outputting the third character string acquired by the second searching step when the second searching step is selected.
